# EUROPEAN PATENT SPECIFICATION

(11) **EP 1 493 647 B1**
(45) Date of publication and mention of the grant of the patent: **31.10.2007**
(21) Application number: 03425408.6
(22) Date of filing: 24.06.2003
(51) Int. Cl.: B62D 1/06

(54) **Heated and cooled steering wheel**
Beheiztes und gekühltes Lenkrad
Volant chauffant et refroidissant

(43) Date of publication of application: 05.01.2005
(73) Proprietor: KEY SAFETY SYSTEMS, INC., Sterling Heights, MI 48314 (US)
(72) Inventor: Menaldo, Lorenzo, 37069 Villafranca (IT); Testa, Giuseppe, 37031 Illasi (IT); Muscio, Alberto, 41100 Modena (IT); Soragni, Stefano, 42018 S. Martino in Rio (IT)
(74) Representative: Gislon, Gabriele

(56) References cited:
- WO-A-03/047942
- DE-A- 19 951 224
- PATENT ABSTRACTS OF JAPAN vol. 1998, no. 14, 31 December 1998 (1998-12-31) & JP 10 230857 A (NIPPON OIL CO LTD), 2 September 1998 (1998-09-02)

## Description

The invention relates to a heated and cooled steering wheel for motor vehicles.

When, in summer or in hot climates regions, a motor vehicle is parked in direct sun light, the temperature of the passenger compartment increases to high values, resulting in extremely comfortless conditions. In particular, the steering wheel temperature can be so high that it cannot be handled safely.

Likewise in winter, vehicle interior surfaces, and also the steering wheel, can become very cold.

Even if the vehicle is provided with a powerful air conditioning and heating system, the steering wheel takes a long time to be cooled or heated. As a matter of fact, the steering wheel, being the very first component to get in touch with the driver's skin, has to be quickly cooled or heated.

Different ways to solve the problem of a quick steering wheel temperature control have been suggested, see e.g. WO 03/047942 A1, DE 19 951 224 A1, WO 2004/098979 A1 or JP 10 230 857 A.

US 4,640,340 discloses a steering wheel wherein the heating/cooling effect of thermoelectric transducers, which utilize the Peltier effect, is used to control the temperature of the gripping portions of the steering wheel. In this embodiment a heat pipe is positioned through the circular ring portion, welded to the hub portion of the steering wheel and is heat-conductively connected to the thermoelectric transducers in the gripping portions and to an aluminium plate located under the skin layer of the steering wheel. The heat absorbed by the plate can be conducted to a radiation portion through the heat pipe and radiated; vice versa, when the plate is heated, heat can be absorbed from the radiation portion and transmitted to the plate through the heat pipe.

FR 2682071 concerns a heated/cooled steering wheel wherein variations in temperature of the ring portion of the steering wheel are achieved by using the Peltier effect from a current flowing through an electric wire spirally winded on the core of the ring portion.

Another example of steering wheel supplied with an apparatus which is based on the Peltier effect is disclosed in US 5,850,741. In particular the steering wheel of US 5,850,741 is provided with a heat pump housed in the hub portion and heat pipes and heat exchangers housed in the gripped portions. The heat pump is preferably a thermoelectric one (e.g., a Peltier device) and may be coupled to an auxiliary heat exchanger like a fan.

Other solutions, which are not based on the Peltier effect, have been provided in order to control the temperature of a steering wheel. For example, US 6,481,312 proposes a ventilated steering wheel wherein the ring portion is supplied with an internal air duct. A plurality of through holes, circumferentially distributed, connects the duct with the external surface of the ring portion, where the driver has the grip. A fan housed in an intermediate portion of the steering wheel, between the ring and the spokes, provides an air flow into the duct, which air flow provides the heating/cooling of the ring portion of the steer.

Steering wheels of the known art with controlled temperatures have several drawbacks, thus they are not industrialized in a large scale. In the steering wheels of US 4,640,340 and US 5,850,741 only the hand grip portions of the ring are affected by the heating/cooling effect.

Furthermore heat pipes can be adopted only in some restricted areas of the steering wheel. In fact their operation is based on the "capillarity effect" and this effect cannot be achieved for long extension of the pipe. Moreover heat pipes dissipate heat with an exponential law along their length, this causing the last third of a pipe not to be as efficient as the remaining part of the pipe.

Besides, in steering wheels of the known art which use a Peltier device, heat flows are achieved through a difference in temperatures between different regions of the steer, a first region called "warm side" and a second region called "cool side", caused by a difference in the voltage of the same regions. The cool region stands cool until the warm side keeps supplying a heat flow. If the temperature of the warm side matches the temperature of the cool side, the Peltier device saturates and may burn, this causing a failure of the heating/cooling system.

The fan present in the steering wheel described in US 6,481,312 causes the steering wheel to be noisy. Furthermore, fluid dynamic losses cause the holes on the ring portion not to be supplied with the same amount of air, this causing the temperature of the ring portion not to be uniform.

DE-A-19951224 refers to a conditioned steering wheel provided with a closed hydraulic circuit arranged as a loop with the steering wheel external rim. A fluid is circulated within the circuit by a pump. Temperature of the fluid is controlled by a Peltier element installed in the hub region.

There is therefore the necessity of providing a heated and cooled steering wheel wherein the temperature of the ring portion in its entirety is controlled within a wide range.

It is an aim of this invention to solve the above mentioned problems by providing a steering wheel having an apparatus for heating or cooling its circular ring, which is noiseless, compact and reliable, that can be housed in a steering wheel together with an air bag kit and other known devices, and wherein the ring temperature is changed with a high efficiency and in a short time.

A further object of the present invention is to provide a process for conditioning, i.e. for heating and cooling a steering wheel which is simple and reliable and which can change the steering wheel temperature in a very short time.

These aims and other objects are accomplished by the steering wheel of the present invention which comprises a ring portion, at least one spoke portion, a hub portion and a reversible heat pump, characterized in that it further comprises a closed hydraulic circuit including a hydraulic pump to circulate a fluid in said circuit and at least one duct extending along at least part of said ring portion.

With the wording "ring portion" it is meant the gripping portion of the steering wheel, i.e. that portion that comes into contact with the driver's hands. The "ring portion" is usually a closed circular ring (a closed loop) but it can have any shape and it can be "U" shaped to form an open ring (open loop). The wording "spoke portion" of the steering wheel identifies any portion connecting the central part of the steering wheel, i.e. the hub, with the ring portion; the spoke portion(s) may have any suitable shape and may be in any suitable number.

According to a preferred embodiment of the invention, the duct extending along at least part of the ring portion of the steering wheel is a multi-channel duct, formed by a plurality of parallel channels.

According to a preferred embodiment of the present invention, the reversible heat pump is a Peltier device which comprises at least two thermoelectric modules spaced and symmetrically arranged to define a heat exchanging area for heat exchanging means.

Generally, the hydraulic circuit comprises a multi-channel duct, junction ducts, a hydraulic pump and heat exchanging means internal to the heat pump.

The multi-channel duct is coupled to a first junction duct connecting the outlet of the internal heat exchanging means to said multi-channel duct, and a second junction duct connecting said multi-channel duct to the inlet of the internal heat exchanging means.

The second junction duct is provided with a hydraulic pump. Also a plenum can be provided, so to avoid over pressures of the fluid. The aim of the hydraulic pump is to circulate the fluid in the above mentioned hydraulic circuit.

In the hub portion of the steering wheel, the hydraulic circuit comprises also an internal heat exchanging means which connects the first and the second junction ducts, so that the circuit is a closed one, and that is sandwiched between the above mentioned thermoelectric modules.

Suitable fluids are, for example, distilled water or a mixture of water and hydroxylated products. In the preferred embodiment of the invention the fluid is a mixture of distilled water and glycol.

Also heat sinks may be externally connected to the thermoelectric modules so to provide a further improvement in heat dissipation.

The invention also relates to a process of heating and cooling a steering wheel as above disclosed, characterized in comprising the steps of: conditioning a liquid in a heat pump; circulating said liquid through a duct extending along at least part of a ring portion of said steering wheel, and feeding said liquid back to said heat pump by means of a hydraulic pump.

Preferably air from the air conditioning system of the vehicle (vehicle provided with the steering wheel of the invention) is directed to blow on the heat pump. Thus the hub portion can be provided with appropriate air intakes, channels and exhaust nozzles so to supply the heat pump with the appropriate air flow.

It will be clear to the person skilled in the art that the hydraulic circuit may comprise two multi-channel ducts, for example in cross-flow, without escaping from the scope of the present invention.

Depending on the direction of the electric current in the thermoelectric modules, the heat pump absorbs heat from the fluid flowing in the hydraulic circuit or supplies heat to the same fluid. The fluid is circulated in the circuit by the hydraulic pump, and while flowing in the multi-channel duct provides the temperature control of the ring portion by vectoring the heat from/to the ring portion itself.

The invention has many advantages with respect to the known art. In fact, the steering wheel according to the invention can be completely heated and cooled on the ring portion. Moreover the invention, being based on a liquid cooling apparatus, is more efficient than apparatus according to the known techniques, which utilize heat pipes and Freon.

The higher efficiency of the invention allows compact components to be used, this leading to layouts which permit the steering wheel to lodge an air bag module, electronic devices, etc..

Moreover faster temperature changes of the ring portion are achieved by the steering wheel according to the invention than in cooled/heated steering wheels of the known art.

A further advantage is that the system is noiseless, thanks to the fact that the only moving mechanical part is the hydraulic pump.

The invention will now be described in greater detail with reference to the drawings enclosed as a non-limiting example, where:
- fig. 1 is a schematic front view of the steering wheel according to the invention;
- fig. 2 is a side view of the steering wheel of fig. 1;
- fig. 3 is a perspective cross-section view of the ring portion;
- fig. 4 is a cross-sectional view of a multi-channel duct;
- fig. 5 is a scheme of the heat pump used in the steering wheel of fig. 1.

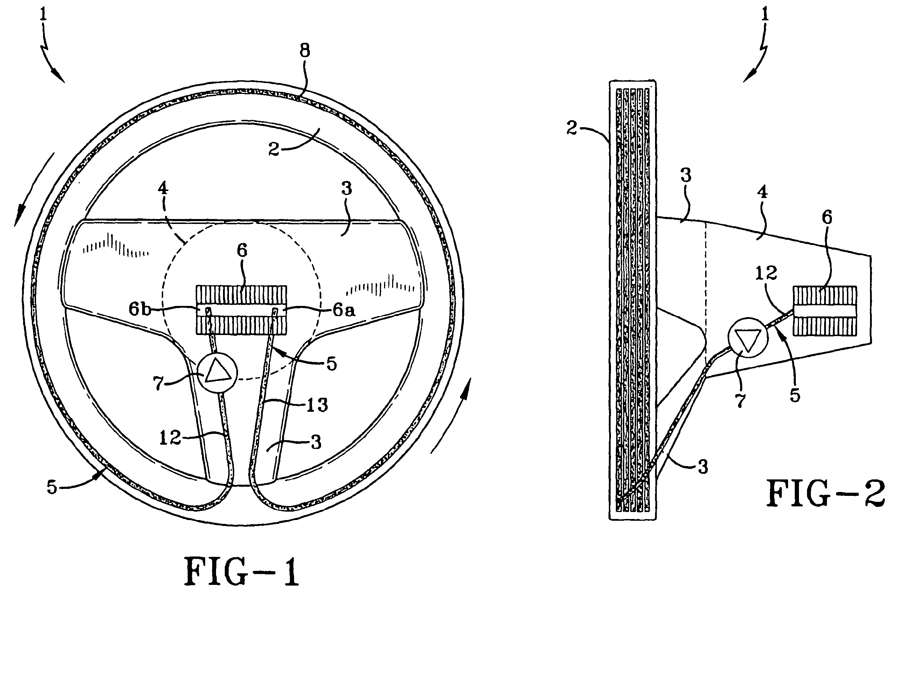

With reference to figs. 1-5, the steering wheel 1 according to the invention has a circular ring portion 2, spoke portions 3 integrally connected thereto and also connected to a hub portion 4. The steering wheel 1 is provided with a hydraulic circuit 5, a reversible heat pump 6 and a hydraulic pump 7 that circulates a fluid in a hydraulic circuit 5. A heat exchanger and hydraulic pump are housed in the hub portion 4.

The fluid is preferably a liquid and more preferably the liquid is a mixture of water and glycol; the amount of glycol in the mixture is preferably within the range of 20% to 40% by weight of the liquid, in order to reach a freezing temperature of about -40°C. Other possible fluids are alcohols, pure or in a mixture with water or gases such as freon.

The hydraulic circuit 5 comprises at least one duct 8 housed in the ring portion 2 and extending along at least a part of the ring portion 2, but preferably along the whole length of it. For example, there may be two ducts 8 in opposite parallel flows. In the shown embodiment, the hydraulic circuit 5 is provided with a single duct 8 that connects an outlet 6a of a heat pump 6 with an inlet 6b after having covered substantially the whole length of the ring portion.

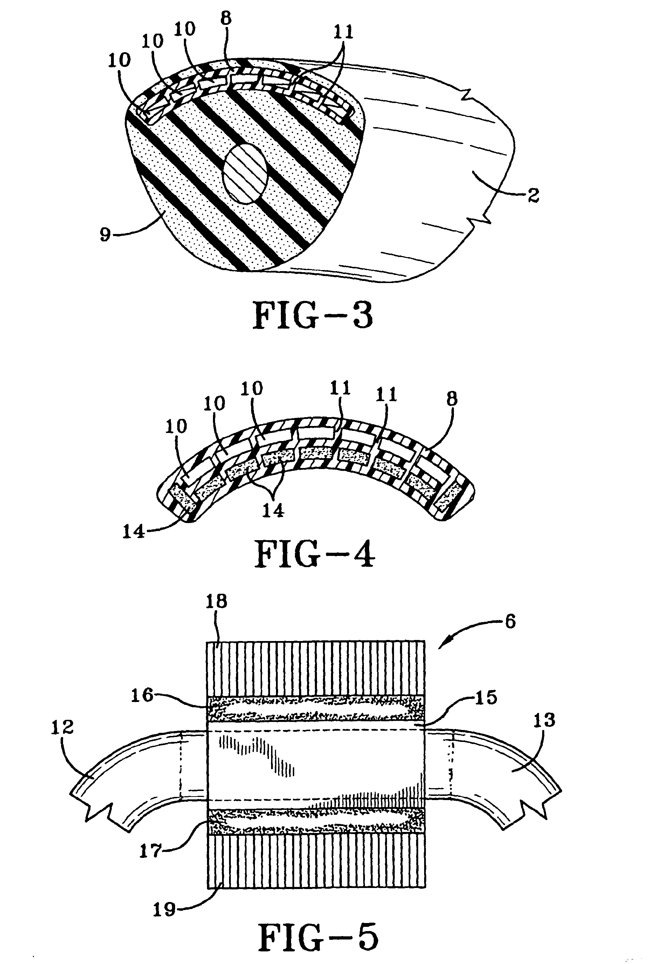

The duct 8 can be made of many different materials and can be shaped in different ways, depending on the shape of the ring portion 2. The duct 8 is preferably obtained by extrusion of a thermoplastic material and has a curved shape to conform to the shape of the surface 9 of the steering wheel (fig.3) and to result substantially parallel to said surface 9. The duct 8 should have walls as thin as possible to better transmit heat, and it is arranged as close as possible to the surface 9. The duct 8 shown in the figures is separated from the external surface 9 by a foam which conducts heat.

In the preferred embodiment shown in figures 3 and 4, the duct 8 is a multi-channel duct formed by a plurality of parallel channels 10, wherein flows the mixture of water and glycol, two adjacent channels being separated by walls 11 that are radially oriented with respect to the core of the circular portion 2 and substantially perpendicular to a surface 9 of the circular portion 2, i.e. to the surface that is gripped by the user. A good resistance to compression is thus obtained. The parallel channels 10 may have different shapes such as rectangular, lenticular, asymmetric etc., different layouts within duct 8, and may be provided with internal turbulators in order to reach high heat exchange coefficients.

The multi-channel duct 8 shown in figures 3-4 is made by extrusion of a plastic material into a curved structure where each channel 10 has a rectangular cross-section and is substantially parallel to an adjacent channel 10, i.e. two channels 10 share a wall 11, which is also a rib to improve the resistance to compression of the multi-channel duct 8.

Fig. 4 shows a further embodiment of a multi-channel duct 8, that is provided with a plurality of insulating channels 14 positioned under flow channels 10 and integral to them, in order to provide thermal insulation from the core of the ring portion 2. The insulating channels 14 may contain a fluid having low heat exchange coefficients. In the embodiment shown in figure 4 the insulating channels 14 contain air.

The terminal portions of each multi-channel duct 8 in the hydraulic circuit 5 are connected to an internal heat exchanger 15 of the heat pump 6 via junction ducts 12, 13. The junction ducts are lodged in spoke portions 3, are as short as possible and have a tubular shape with thin walls, being made of a plastic material. Also the junction ducts are preferably covered with an insulating layer and are spaced from the metal portion of the steering wheel so to avoid thermal losses in the spoke portions 3. In particular, the two end portions of the multi-channel duct 8 shown in the enclosed drawings are respectively connected to a first junction duct 12 and to a second junction duct 13, both junction ducts 12, 13 being housed in the lower spoke portion 3 of the steering wheel 1. The junction ducts 12, 13 are themselves connected to internal heat exchanger 15 of heat pump 6.

One of the junction ducts is provided with hydraulic pumps and a plenum. In particular one hydraulic pump is necessary for each multi-channel duct 8 provided in the steering wheel 1, in order to circulate the fluid inside each duct 8. Suitable hydraulic pumps are, for example, centrifugal pumps, gear type pumps, diaphragm pumps, helical rotor pumps, etc.. Preferably, hydraulic pumps are provided upstream of the internal heat exchangers, in order to have the heat generated by the pump immediately treated by the heat exchanger.

In the embodiment in figures 1-2 the first junction duct 12 is provided with lobular hydraulic pump 7 e.g. of the type used for feeding fuel to the vehicle engine.

The internal heat exchanger of the heat pump is connected to the junction ducts and is heat conductively connected to the heat pump 6. The internal heat exchanger is generally provided with a plurality of channels wherein the fluid can efficiently exchange heat with the reversible heat pump 6. For example the internal heat exchanger can be provided with turbulators to improve the heat transfer coefficient between the fluid and the walls of said channels, and consequently improve thermal flows with the heat pump 6. Also said channels may be configured to support cross flows or opposite direction flows. Figure 5 shows a scheme of the heat pump 6 of the invention hydraulic circuit of fig. 1, the heat pump 6 being coupled to the internal heat exchanger 15.

The heat pump 6 preferably comprises a plurality of thermoelectric modules, heat conductively connected to the internal heat exchanger 15, preferably without heat bridges formed, for example, by screws. According to the preferred embodiment of the invention (fig. 5), at least two thermoelectric modules 16, 17 are provided on two different sides of the internal heat exchanger 15, in such a way that the internal heat exchanger 15 is sandwiched between the modules, a thermal grease, supplied with dispersed metallic dusts, being interposed between modules and exchanger. In the arrangement shown in fig. 5, the internal heat exchanger 15 is sandwiched between the thermoelectric modules 16, 17 of the heat pump 6, in such a way that, when the heat pump 6 is operative, the electric charge on surfaces of the modules 16, 17 which face the internal heat exchanger 15 has, at a given time, the same sign (positive or negative) on both modules 16, 17.

Also, in general, heat sinks may be externally connected to the thermoelectric modules so to provide a further improvement in heat dissipation. The embodiment shown in figures 1-5 is provided with two heat sinks 18, 19 connected, heat conductively, to the thermoelectric modules 16, 17.

To further improve heat exchange, air from the air conditioning system of the vehicle (vehicle provided with the steering wheel according to the invention) is directed to blow on the heat pump 6, and in particular on the heat sinks 16, 17. In this embodiment, the hub portion 4 is provided with appropriate air intakes, channels and exhaust nozzles so to supply the appropriate air flow. Also a fan may be mounted on the steering wheel 1 to provide the appropriate air flow.

The process of the invention thus provides for conditioning a liquid in a heat pump by heating or cooling it; circulating said liquid through duct 8 extending along the ring portion 2 of the steering wheel and feeding the liquid back to the heat pump 6 by means of the hydraulic pump 7.

The fluid circulation velocity is preferably within the range from 1 to 3 m/s and the fluid flow rate is preferably within the range from 7 to 10 m³/h. The delivery pressure of said hydraulic pump (7) is preferably within the range of 0.5 to 3.0 bar. The electric motor of the pump is a 12 or 24 Volts cc motor suitable to be used in a temperature range of -40°C to +110°C.

Depending on the direction of the electric current in the thermoelectric modules 16, 17, the heat pump 6 absorbs heat from the fluid flowing in the hydraulic circuit 5 or supplies heat to the same fluid. The fluid is circulated in the circuit 5 by the hydraulic pump 7, and while flowing in the multi-channel duct 8 provides the temperature control of the ring portion 2 by vectoring the heat from/to the ring portion 2 itself. Consequently, by varying the operative parameters of the heat pump 6 and hydraulic pump 7, and possibly the air flow blowing on heat pump 6, the temperature of the external surface 9 of the ring portion 2 is controlled.

## Claims

1. A heated and cooled steering wheel (1) comprising a ring portion (2), at least one spoke portion (3) and a hub portion (4), further comprising a hydraulic circuit (5), arranged in a closed loop configuration, including an hydraulic pump (7) to circulate a fluid in said circuit (5) and at least one duct (8) extending along at least part of said ring portion (2), and a reversible heat pump (6) which absorbs or supplies heat from/to the said fluid, **characterized in that** said at least one duct (8) is a multi-channel duct (8) comprising a plurality of parallel channels (10) integral to each other by separation walls (11).

2. A heated and cooled steering wheel (1) according to claim 1, wherein said heat pump (6) comprises at least two thermoelectric modules (16, 17).

3. A heated and cooled steering wheel according to claim 2, wherein said at least two thermoelectric modules (16, 17) are spaced and symmetrically arranged to define a heat exchanging area for heat exchanging means (15).

4. A heated and cooled steering wheel (1) according to claim 3, wherein said thermoelectric modules (16, 17) are Peltier devices heat conductively coupled to said internal heat exchanging means (15) and to an external heat sink (18, 19).

5. A heated and cooled steering wheel (1) according to any claim 1 to 4, wherein said multi-channel duct (8) further comprises a second plurality of insulating channels (14) interposed between said plurality of separate channels (10) and a core portion of said ring portion (2).

6. A heated and cooled steering wheel (1) according to claim 1 to 5, wherein each of said separate parallel channels (10) has a rectangular cross-section.

7. A heated and cooled steering wheel (1) according to any previous claim 1 to 6, **characterized in that** said fluid is a mixture of water and glycol.

8. A heated and cooled steering wheel (1) according to any previous claim 1 to 7, comprising a first junction duct (13) connecting the outlet of said internal heat exchanging means (15) to said multi-channel duct (8), and a second junction duct (12) connecting said multi-channel duct (8) to the inlet of said internal heat exchanging means (15), said second junction duct (12) being provided with a hydraulic pump (7).

9. A heated and cooled steering wheel (1) according to claim 3, wherein said thermoelectric modules (16, 17) are Peltier devices heat conductively coupled to said internal heat exchanging means (15) and to an external heat sink (18, 19).

10. A heated and cooled steering wheel (1) according to any of preceding claims 1 to 9, further comprising means to feed hot or cold air from an air conditioning system of the vehicle to said heat pump (6).

11. A process of heating and cooling a steering wheel according to any claim 1 to 10, **characterized in**
- conditioning a liquid in a heat pump (6);
- circulating said liquid through a duct (8) extending along at least part of a ring portion (2) of said steering wheel (1), and
- feeding said liquid back to said heat pump (6) by means of a hydraulic pump (7).

12. A process according to claim 11, wherein said fluid circulation velocity is within the range from 1 to 3 m/s and said fluid flow rate is within the range from 7 to 10 m³/h.

13. A process according to claim 11 or 12, wherein the delivery pressure of said hydraulic pump (7) is within the range from 0,5 to 3,0 bar.

## Patentansprüche

1. Beheiztes und gekühltes Lenkrad (1), umfassend einen Kranzteil (2), wenigstens einen Speichenteil (3) und einen Nabenteil (4), ferner umfassend einen in einer geschlossenen Kreislaufkonfiguration angeordneten Hydraulikkreis (5), der eine Hydraulikpumpe (7) zum Umwälzen eines Fluids in dem genannten Kreis (5) und wenigstens eine Leitung (8) aufweist, die an wenigstens einem Teil des genannten Kranzteils (2) entlang verläuft, und eine reversible Wärmepumpe (6), die Wärme aus dem genannten Fluid absorbiert oder ihm Wärme zuführt, **dadurch gekennzeichnet, dass** die wenigstens eine Leitung (8) eine Mehrkanalleitung (8) ist, die eine Vielzahl von parallelen Kanälen (10) umfasst, die durch Trennwände (11) miteinander integral sind.

2. Beheiztes und gekühltes Lenkrad (1) nach Anspruch 1, bei dem die Wärmepumpe (6) wenigstens zwei thermoelektrische Module (16, 17) umfasst.

3. Beheiztes und gekühltes Lenkrad nach Anspruch 2, bei dem die wenigstens zwei thermoelektrischen Module (16, 17) beabstandet und symmetrisch angeordnet sind, um einen Wärmetauschbereich für eine Wärmetauschvorrichtung (15) zu definieren.

4. Beheiztes und gekühltes Lenkrad (1) nach Anspruch 3, bei dem die thermoelektrischen Module (16, 17) Peltiervorrichtungen sind, die wärmeleitend mit der inneren Wärmetauschvorrichtung (15) und mit einer äußeren Wärmesenke (18, 19) verbunden sind.

5. Beheiztes und gekühltes Lenkrad (1) nach einem der Ansprüche 1 bis 4, bei dem die Mehrkanalleitung (8) ferner eine zweite Vielzahl von Isolierkanälen (14) umfasst, die zwischen der Vielzahl von separaten Kanälen (10) und einem Kernteil des Kranzteils (2) angeordnet sind.

6. Beheiztes und gekühltes Lenkrad (1) nach einem der Ansprüche 1 bis 5, bei dem jeder der separaten parallelen Kanäle (10) einen rechteckigen Querschnitt hat.

7. Beheiztes und gekühltes Lenkrad (1) nach einem der vorhergehenden Ansprüche 1 bis 6, **dadurch gekennzeichnet, dass** das genannte Fluid ein Gemisch aus Wasser und Glykol ist.

8. Beheiztes und gekühltes Lenkrad (1) nach einem der vorhergehenden Ansprüche 1 bis 7, umfassend eine erste Verbindungsleitung (13), die den Auslass der inneren Wärmetauschvorrichtung (15) mit der Mehrkanalleitung (8) verbindet, und eine zweite Verbindungsleitung (12), die die Mehrkanalleitung (8) mit dem Einlass der inneren Wärmetauschvorrichtung (15) verbindet, wobei die zweite Verbindungsleitung (12) mit einer Hydraulikpumpe (7) versehen ist.

9. Beheiztes und gekühltes Lenkrad (1) nach Anspruch 3, bei dem die thermoelektrischen Module (16, 17) Peltiervorrichtungen sind, die wärmeleitend mit der inneren Wärmetauschvorrichtung (15) und mit einer externen Wärmesenke (18, 19) verbunden sind.

10. Beheiztes und gekühltes Lenkrad (1) nach einem der vorhergehenden Ansprüche 1 bis 9, ferner umfassend Mittel zum Zuführen von Warm- oder Kaltluft aus einer Klimaanlage des Fahrzeugs zu der Wärmepumpe (6).

11. Verfahren zum Beheizen und Kühlen eines Lenkrads nach einem der Ansprüche 1 bis 10, **gekennzeichnet durch**
- Konditionieren einer Flüssigkeit in einer Wärmepumpe (6);
- Umwälzen der Flüssigkeit **durch** eine Leitung (8), die an wenigstens einem Teil eines Kranzteils (2) des Lenkrads (1) entlang verläuft, und
- Zurückführen der Flüssigkeit mit Hilfe einer Hydraulikpumpe (7) zu der Wärmepumpe (6).

12. Verfahren nach Anspruch 11, bei dem die Umwälzgeschwindigkeit des genannten Fluids im Bereich von 1 bis 3 m/s liegt und der Durchfluss des genannten Fluids im Bereich von 7 bis 10 m³/h liegt.

13. Verfahren nach Anspruch 11 oder 12, bei dem der Förderdruck der Hydraulikpumpe (7) im Bereich von 0,5 bis 3,0 bar liegt.

## Revendications

1. Volant chauffé et refroidi (1) comprenant une partie anneau (2), au moins une partie rayon (3) et une partie moyeu (4), comprenant en outre un circuit hydraulique (5), disposé en une configuration en boucle fermée, comprenant une pompe hydraulique (7) pour faire circuler un fluide dans ledit circuit (5) et au moins un conduit (8) s'étendant le long d'au moins une partie de ladite partie en anneau (2), et une pompe à chaleur réversible (6) qui absorbe ou fournit de la chaleur dudit/audit fluide, **caractérisé en ce que** ledit au moins un conduit (8) est un conduit multi-canal (8) comprenant une pluralité de canaux parallèles (10) fixes l'un par rapport à l'autre par des parois de séparation (11).

2. Volant chauffé et refroidi (1) selon la revendication 1, dans lequel ladite pompe à chaleur (6) comprend au moins deux modules thermoélectriques (16, 17).

3. Volant chauffé et refroidi selon la revendication 2, dans lequel les au moins deux modules thermoélectriques (16, 17) sont espacés et disposés de manière symétrique pour définir une aire d'échange de chaleur pour un échangeur de chaleur (15).

4. Volant chauffé et refroidi (1) selon la revendication 3, dans lequel lesdits modules thermoélectriques (16, 17) sont des dispositifs Peltier couplés, de manière à conduire la chaleur audit échangeur de chaleur interne (15) et à un puits thermique externe (18, 19).

5. Volant chauffé et refroidi (1) selon l'une quelconque des revendications 1 à 4, dans lequel ledit conduit multi-canal (8) comprend en outre une seconde pluralité de canaux calorifuges (14) interposée entre ladite pluralité de canaux séparés (10) et une partie noyau de ladite partie anneau (2).

6. Volant chauffé et refroidi (1) selon les revendications 1 à 5, dans lequel chacun desdits canaux parallèles séparés (10) a une coupe rectangulaire.

7. Volant chauffé et refroidi (1) selon l'une quelconque des revendications 1 à 6, **caractérisé en ce que** ledit fluide est un mélange d'eau et de glycol.

8. Volant chauffé et refroidi (1) selon l'une quelconque des revendications 1 à 7, comprenant un premier conduit de jonction (13) connectant la sortie dudit échangeur de chaleur interne (15) audit conduit multi-canal (8), et un second conduit de jonction (12) connectant ledit conduit multi-canal (8) à l'entrée dudit échangeur de chaleur interne (15), ledit second conduit de jonction (12) étant muni d'une pompe hydraulique (7).

9. Volant chauffé et refroidi (1) selon la revendication 3, dans lequel lesdits modules thermoélectriques (16, 17) sont des dispositifs Peltier couplés, de manière à conduire la chaleur audit échangeur de chaleur interne (15) et à un puits thermique externe (18, 19).

10. Volant chauffé et refroidi (1) selon l'une quelconque des revendications 1 à 9, comprenant en outre un moyen pour alimenter ladite pompe à chaleur (6) en air chaud ou froid venant d'un système d'air conditionné du véhicule.

11. Procédé de chauffage et de refroidissement d'un volant selon l'une quelconque des revendications 1 à 10, **caractérisé par**:
- le fait de conditionner un liquide dans une pompe à chaleur (6);
- le fait de faire circuler ledit liquide dans un conduit (8) s'étendant le long d'au moins une partie d'une partie en anneau (2) dudit volant (1), et
- le fait de renvoyer ledit liquide à ladite pompe à chaleur (6) au moyen d'une pompe hydraulique (7).

12. Procédé selon la revendication 11, dans lequel la vitesse de circulation dudit fluide est dans l'intervalle allant de 1 à 3 m/s et le débit dudit fluide est dans l'intervalle allant de 7 à 10 m³/h.

13. Procédé selon la revendication 11 ou 12, dans lequel la pression de refoulement de ladite pompe hydraulique (7) est dans l'intervalle allant de 0,5 à 3,0 bar.
